Europäisches Patentamt

European Patent Office

Office européen des brevets

(19)

(11) Veröffentlichungsnummer : **0 388 521 B1**

(12) # EUROPÄISCHE PATENTSCHRIFT

(45) Veröffentlichungstag der Patentschrift :
**05.08.92 Patentblatt 92/32**

(51) Int. Cl.⁵ : **F16L 59/14, F16L 59/12,
F16L 59/02**

(21) Anmeldenummer : **89121417.3**

(22) Anmeldetag : **20.11.89**

(54) **Wärmedämmung für Rohre oder Behälter.**

(30) Priorität : **20.03.89 DE 3909066**

(43) Veröffentlichungstag der Anmeldung :
**26.09.90 Patentblatt 90/39**

(45) Bekanntmachung des Hinweises auf die
Patenterteilung :
**05.08.92 Patentblatt 92/32**

(84) Benannte Vertragsstaaten :
**AT BE DE IT LU NL**

(56) Entgegenhaltungen :
**AT-B- 316 946**
**DE-A- 2 945 877**
**DE-A- 3 104 908**
**DE-A- 3 219 816**
**DE-A- 3 239 144**

(73) Patentinhaber : **G + H MONTAGE GMBH**
**Bürgermeister Grünzweig-Strasse 1**
**W-6700 Ludwigshafen am Rhein (DE)**

(72) Erfinder : **Wunsch, Horst**
**Bergheimer Strasse 116**
**W-6900 Heidelberg (DE)**
Erfinder : **Scharl, Jürgen**
**Georg-Gerhard-Strasse 5**
**W-6714 Weisenheim/Sand (DE)**
Erfinder : **Floca, Johann**
**Gutenbergstrasse 16a**
**W-6944 Hemsbach (DE)**

(74) Vertreter : **Patentanwälte Grünecker,**
**Kinkeldey, Stockmair & Partner**
**Maximilianstrasse 58**
**W-8000 München 22 (DE)**

**Beschreibung**

Die Erfindung betrifft eine Wärmedämmung für Rohre oder Behälter, mit einer auf der Außenwand des Rohrs angeordneten Dämmstoffschicht und einem über der Dämmstoffschicht als Oberflächenschutz angeordneten Schutzmante (7.B. DE-A- 3 104 908).

Es sind derartige Wärmedämmungen bekannt, bei denen als Dämmstoffschichten durch Bindemittel verfestigte Mineralfaserschalen verwendet werden, die ausreichend fest sind, um den darüberliegenden Schutzmantel zu tragen. Derartige Mineralfaserschalen sind jedoch etwa nur bis zu Rohrwandtemperaturen von etwa 250° verwendbar. Oberhalb dieser Temperatur kommt es zu Bindemittelausdünstungen, durch die sich die Festigkeit der Mineralfaserschalen unzulässig verringert. Die Mineralfaserschalen haben darüber hinaus den Nachteil, daß ihre Herstellungskosten mit wachsendem Rohrdurchmesser stark ansteigen und ihr Einsatz insbesondere für Rohre mit Rohrdurchmessern größer als 200 mm in vielen Fällen unwirtschaftlich ist.

Wegen der genannten Nachteile wurden bei Rohrtemperaturen ab 250° und für Rohrdurchmesser größer 200 mm bisher Wärmedämmungen der eingangs erwähnten Art eingesetzt, die eine Dämmstoffschicht aus Mineralwolle, die auf ein Drahtgeflecht aufgesteppt ist, und eine Stützkonstruktion aufweisen, wobei die Stützkonstruktion Trageringe für die Halterung des Schutzmantels umfaßt, die durch Stützbolzen, die die Dämmstoffschicht durchsetzen, konzentrisch gegen die Rohrwand abgestützt sind.

Nachteile dieser Wärmedämmung bestehen darin, daß die Montage verhältnismäßig aufwendig ist, und daß durch die Stützbolzen, die im Vergleich zum Dämmaterial gut wärmeleitend sind, die Isolationswirkung der Wärmedämmung beeinträchtigt ist.

Es ist die Aufgabe der Erfindung, eine Wärmedämmung der eingangs erwähnten Art vorzuschlagen, die gegenüber den bekannten Wärmedämmungen verbessert ist.

Erfindungsgemäß wird diese Aufgabe dadurch gelöst, daß im Abstand die Rohre mit der Dämmstoffschicht umgebende Dämmstoffgürtel mit darüber angeordneten Tragegürteln vorgesehen sind, wobei jeweils die Dämmstoffschicht und die Dämmstoffgürtel unter dem Tragegürtel zusammengepreßt und verdichtet sind und der Schutzmantel gegen den Tragegürtel zur Anlage kommt.

Durch diese erfindungsgemäße Lösung wird erreicht, daß zur Halterung des Schutzmantels keine Stützbolzen erforderlich sind, da durch das verfestigte Dämmaterial der Dämmstoffschicht bzw. des Dämmstoffgürtels und den Tragegürtel eine ausreichend stabile Auflage für den Blechmantel gegeben ist. Die Dämmwirkung im Bereich der Gürtel ist mindestens dem homogenen Dämmbereich gleichzusetzen; in den meisten Fällen ist sie sogar besser.

Ein weiterer Vorteil der erfindungsgemäßen Lösung besteht darin, daß in vielen Anwendungsfällen der Montageaufwand und damit die Kosten für die Installation der Wärmedämmung gegenüber herkömmlichen Wärmedämmungen verringert sind.

Der Dämmstoffgürtel und die Dämmstoffschicht sind unter dem Tragegürtel vorzugsweise so weit zusammengepreßt, daß der Tragegürtel etwa bündig mit der Oberfläche der Dämmstoffschicht abschließt. Der Schutzmantel liegt daher nicht nur auf dem Tragegürtel, sondern auch auf der Dämmstoffschicht zwischen den Tragegürteln auf, wodurch eine zusätzliche, die durch die Tragegürtel gebildeten Abstützstellen entlastende Abstützwirkung erzielt wird. In einer bevorzugten Ausführungsform der Erfindung weist der Dämmstoff unter dem Tragegürtel jeweils eine Dichte von 120 kg/m$^3$ auf und der Abstand zwischen den Dämmstoff bzw. Tragegürteln beträgt wenigstens 950 mm.

Die Breite der Tragegürtel ist wenigstens gleich der Breite der Dämmstoffgürtel, so daß es beim Zusammenpressen nicht dazu kommen kann, daß die Dämmstoffgürtel wulstartig über den Rand der Tragegürtel hinaus vorstehen. Als Dämmstoffschichten werden vorzugsweise Mineralfasermatten verwendet, die auf ein Drahtgeflecht aufgesteppt sind.

In weiterer vorteilhafter Ausgestaltung der Erfindung sind die Tragegürtel als offene Ringe ausgebildet, die durch einen die beiden Gürtelenden auf das erforderliche Maß zusammenziehenden Signodespanner spannbar sind.

Weitere vorteilhafte Ausgestaltungsmöglichkeiten der Erfindung gehen aus den Unteransprüchen hervor.

Die Erfindung soll nun anhand von Ausführungsbeispielen und der beiliegenden Zeichnungen weiter erläutert und beschrieben werden. Es zeigen:

Fig.1 ein Ausführungsbeispiel für eine erfindungsgemäße Wärmedämmung,

Fig.2 ein Rohr mit einer das Rohr umgebenden Wärmedämmstoffschicht, um die erfindungsgemäß ein Dämmstoffgürtel gelegt ist,

Fig.3 ein weiteres Ausführungsbeispiel für eine Wärmedämmung, die für ein horizontal installiertes Rohr vorgesehen ist, und

Fig.4 ein weiteres Ausführungsbeispiel für eine erfindungsgemäße Wärmedämmung für ein horizonal installiertes Rohr in einem Querschnitt.

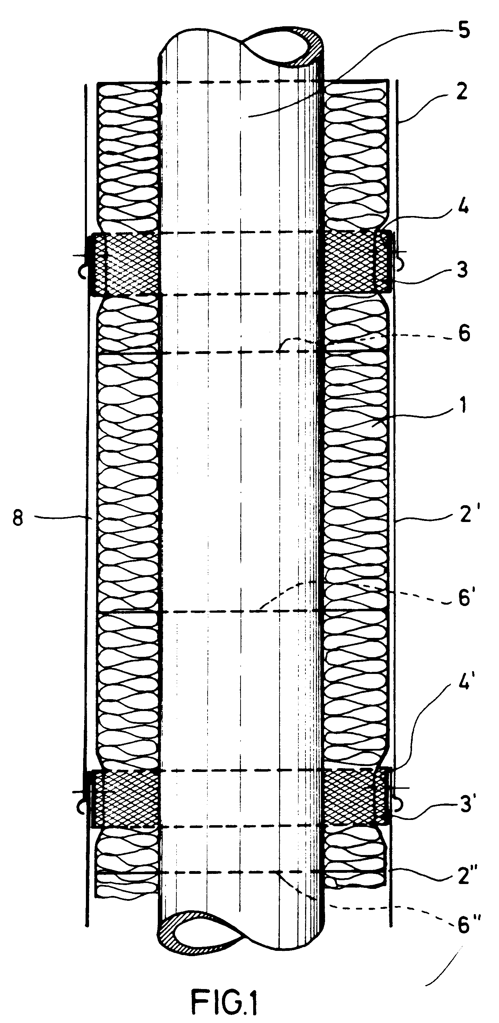

In Fig. 1 ist mit dem Bezugszeichen 1 eine ein Rohr 5 umgebende Dämmstoffschicht bezeichnet. Die Dämmstoffschicht besteht aus Mineralfaserplatten, die jeweils auf ein Drahtgeflecht aufgesteppt sind. Die Dämmstoffmatten sind in der üblichen Weise unter Bildung von Stößen 6, 6′ und 6″ auf das Rohr 5 aufgebunden.

Mit 3 bzw. 3′ ist jeweils ein das Rohr 5 einschließlich der Dämmstoffschichtummantelung 1 des Rohres 5 umgebender Dämmstoffgürtel und mit 4 bzw. 4′ ein über dem Dämmstoffgürtel 3 bzw. 3′ angeordneter Blechgürtel bezeichnet. Die Dicke des Bleches der Blechgürtel liegt vorzugsweise im Bereich zwischen 1 und 1,5 mm. Die Dämmstoffschicht 1 und der Dämmstoffgürtel 3 bzw. 3′ ist jeweils unter dem Blechgürtel 4 bzw. 4′ soweit zusammengepreßt, daß die äußere Blechgürteloberfläche etwa bündig mit der Oberfläche der Dämmstoffschicht 1 außerhalb des Einschnürungsbereichs abschließt. Durch mit 2, 2′ und 2″ bezeichnete Segmente ist ein einen Oberflächenschutz bildender Blechmantel bezeichnet. Die einzelnen Segmente des Blechmantels überlappen sich jeweils über den Blechgürteln 4 und 4′ und sind durch Ringschweißnähte untereinander und mit den Blechgürteln verbunden. Indem die äußere Oberfläche des Blechgürtels 4 bzw. 4′ geringfügig über die Oberfläche der Dämmstoffschicht 1 hinaus vorsteht, ist vorteilhaft ein schmaler Hinterlüftungsraum 8 zwischen dem Blechmantel und der Dämmstoffschicht gebildet.

Der Blechgürtel 4 bzw. 4′ ist, was der Fig. 1 jedoch nicht zu entnehmen ist, als offener Ring ausgebildet, dessen freie Enden z.B. durch eine Signodespannvorrichtung zusammengezogen werden können. Die freien Enden werden vorzugsweise durch Blindnieten verbunden, die durch vorgestanzte Löcher an den Enden des Blechgürtels geführt sind.

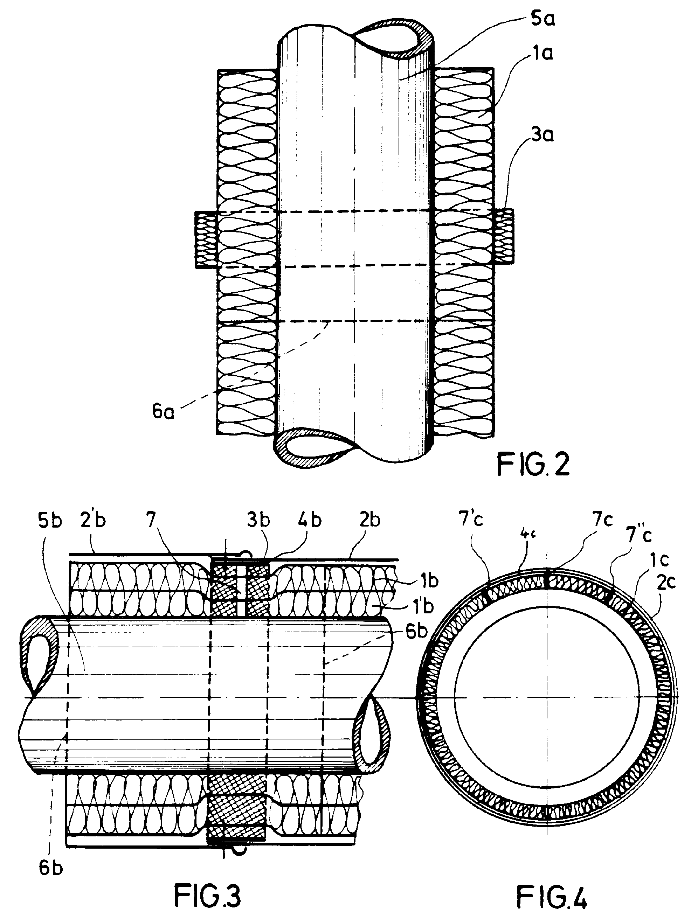

In der Fig. 2 ist zur Verdeutlichung der Erfindung ein Montagezustand vor der Fertigstellung der Wärmedämmung dargestellt, in dem ein Dämmstoffgürtel 3a um ein Rohr 5a, das von einer Dämmschicht 1a umgeben ist, gelegt ist. Der noch nicht durch einen Blechgürtel zusammengepreßte Dämmstoffgürtel weist im vorliegenden Ausführungsbespiel einen rechteckigen Querschnitt auf. Die Gürtelbreite beträgt 100 mm. Die Dicke des Gürtels beläuft sich auf etwa ein Drittel der Dicke der Dämmstoffschicht. Die Dicke der Dämmstoffschicht beträgt im vorliegenden Ausführungsbeispiel 120 mm, kann ansonsten aber entsprechend der gewünschten Dämmwirkung stärker oder schwächer gewählt sein.

In der Fig. 3 ist ein Abschnitt eines horizontal verlaufenden Rohrs 5b, mit einer aus zwei Lagen 1b und 1b′ bestehenden Dämmstoffschicht und einem Blechmantel 2b bzw. 2b′ dargestellt. Mit 7 ist ein Bolzen bezeichnet, durch den ein Blechgürtel 4b gegen das Rohr 5b abgestützt ist. Der vorzugsweise aus Steatit oder einer Keramik bestehende Bolzen 7 durchsetzt die Dämmstoffschicht und verläuft senkrecht zwischen den Scheitellinien des Rohres 5b und des Blechmantels.

In der Fig. 4 sind mit 7c, 7c′ und 7c″ drei eine Dämmstoffschicht 1c durchsetzende Bolzen zum Abstützen eines Blechgürtels 4c bezeichnet, wobei der Bolzen 7c senkrecht zwischen den Scheitellinien des Blechmantels 2c bzw. des Blechgürtels 4c und des Rohres 5c verläuft und die beiden Bolzen 7c′ und 7c″ etwa jeweils im Winkelabstand von 30° zu den Scheitellinien, senkrecht zur Blechmantel- bzw. Rohrtangente verlaufend angeordnet sind. Auch die Bolzen 7c, 7c′ und 7c″ bestehen vorzugsweise aus Steatit oder einer Keramik.

Bei der Montage der in Fig. 1 gezeigten Wärmedämmung wird zunächst die Dämmschicht 1 in Form von Matten, die längs der Stoßlinien 6, 6′ und 6″ aneinanderstoßen, in der üblichen Weise auf das Rohr 5 aufgebunden. Dann werden im Abstand die Dämmstoffgürtel 3, 3′ um das mit der Dämmstoffschicht 1 ummantelte Rohr 5 gelegt und zusammen mit der unter dem Dämmstoffgürtel liegenden Dämmstoffschicht durch den Blechgürtel 4 zusammengepreßt. Die zwei freien Enden der Blechgürtel werden jeweils unter Zusammenpressen der Dämmstoffschicht und des Dämmstoffgürtels mit Hilfe der Spannvorrichtung, vorzugsweise einer Signode-Spannvorrichtung, zusammengezogen.

Durch das Zusammenpressen des Dämmstoffes unter dem Blechgürtel, vorzugsweise bis zu einer Dichte von 120 kg/m³ und darüber, wird der Dämmstoff soweit verfestigt, daß der Blechmantel über die Blechgürtel, die aus verhältnismäßig dünnem Blech bestehen, ohne abstützende Metallbolzen zwischen den Blechgürteln und dem Rohr gehaltert werden kann. Bei der Halterung kommt es vor allem darauf an, zu erreichen, daß der als Blechmantel ausgebildete Schutzmantel eine glatte, von Verbeulungen freie Zylinderoberfläche aufweist.

Durch die Verdichtung des Dämmstoffes unter den Blechgürteln tritt im Bereich der Gürtel wenigstens bis zu einer Verdichtung auf 200 kg/m³ kein erhöhter Wärmeverlust auf. Insgesamt lassen sich die Wärmeverluste gegenüber herkömmlichen Wärmedämmungen mit Trägerringen und Stützbolzen je nach Rohrdurchmesser und Temperatur des das Rohr durchströmenden Mediums bzw. der Rohrwand um 15% bis 25% senken. Die Wärmeverluste sinken wenigstens bis zu der Höhe des Zuschlags der bei den herkömmlichen Wärmedämmungen aufgrund der metallischen Abstandshalter zu berücksichtigen war.

Bei horizontaler Rohrinstallation sind einzelne Bolzen zur Abstützung des Gewichts des Blechmantels entsprechend den Fig. 3 und 4 erforderlich. Durch Verwendung von Keramikmaterial für die Stützbolzen läßt sich der Wärmeverlust gering halten. Bei horizontalem Rohrverlauf können zusätzliche Stützvorrichtungen vorgesehen sein, die vorzugsweise an der Scheitellinie des Schutzmantels angreifen.

Neben glatten Blechen können für den Blechmantel auch in Richtung senkrecht zur Rohrachse profilierte Bleche, z.B. Trapezbleche verwendet werden. Derart profilierte Bleche weisen eine erhöhte Beulsteifigkeit auf, so daß unter Verbesserung der Wärmedämmung größere Abstände zwischen den einzelnen Blechgürteln bzw. Dämmstoffgürteln vorgesehen werden können. Umgekehrt können bei erhöhten Belastungsanforderungen, z.B. wenn hohe Windkräfte abzutragen sind, die Abstände zwischen den Blechgürteln gegenüber den genannten Werten weiter verringert werden und es kann auch eine Verbreiterung der Gürtel erfolgen.

**Patentansprüche**

1. Wärmedämmung für Rohre oder Behälter, mit einer auf der Außenwand des Rohrs (5) angeordneten Dämmstoffschicht (1) und einem über der Dämmstoffschicht (1) als Oberflächenschutz angeordneten Schutzmantel (2), **dadurch gekennzeichnet,** daß im Abstand die Rohre (5) mit der Dämmstoffschicht (1) umgebende Dämmstoffgürtel (3) mit darüber angeordneten Tragegürteln (4) vorgesehen sind, wobei jeweils die Dämmstoffschicht (1) und der Dämmstoffgürtel (3) unter dem Tragegürtel (4) zusammengepreßt und verdichtet sind und der Schutzmantel (2) gegen den Tragegürtel (4) zur Anlage kommt.

2. Wärmedämmung nach Anspruch 1, **dadurch gekennzeichnet,** daß der Tragegürtel ein Blechgürtel (4) ist.

3. Wärmedämmung nach Anspruch 1 oder 2, **dadurch gekennzeichnet,** daß der Schutzmantel ein Blechmantel ist.

4. Wärmedämmung nach einem der Ansprüche 1 bis 3, **dadurch gekennzeichnet,** daß der Dämmstoffgürtel (3) und die Dämmstoffschicht (1) unter dem Tragegürtel soweit zusammengepreßt sind, daß der Tragegürtel (4) etwa bündig mit der Oberfläche der Dämmstoffschicht (1) abschließt.

5. Wärmedämmung nach einem der Ansprüche 1 bis 4, **dadurch gekennzeichnet,** daß der verdichtete Dämmstoff unter dem Tragegürtel (4) eine Dichte von wenigstens 120 kg/m³ aufweist.

6. Wärmedämmung nach einem der Ansprüche 1 bis 5, **dadurch gekennzeichnet,** daß der Abstand zwischen den Dämmstoff- (3) bzw. den Tragegürteln (4) wenigstens 950 mm beträgt.

7. Wärmedämmung nach einem der Ansprüche 1 bis 6, **dadurch gekennzeichnet,** daß die Breite der Tragegürtel (4) wenigstens gleich der Breite der Dämmstoffgürtel (3) ist.

8. Wärmedämmung nach einem der Ansprüche 1 bis 7, **dadurch gekennzeichnet,** daß die Breite der Dämmstoffgürtel (3) wenigstens 100 mm beträgt.

9. Wärmedämmung nach einem der Ansprüche 1 bis 8, **dadurch gekennzeichnet,** daß die Dicke des Dämmstoffgürtels (3) etwa ein Drittel der Dicke der unverdichteten Dämmstoffschicht (1) beträgt.

10. Wärmedämmung nach einem der Ansprüche 1 bis 9, **dadurch gekennzeichnet,** daß die Dämmstoffschicht (3) aus Mineralfasermatten, die auf ein Drahtgeflecht gesteppt sind, besteht.

11. Wärmedämmung nach einem der Ansprüche 1 bis 10, **dadurch gekennzeichnet,** daß die Dämmstoffschicht (1) ein- oder mehrlagig ist.

12. Wärmedämmung nach einem der Ansprüche 1 bis 11, **dadurch gekennzeichnet,** daß die Dämmstoffschicht (1) eine Dicke gemäß der berechneten Dämmdicke aufweist.

13. Wärmedämmung nach einem der Ansprüche 1 bis 12, **dadurch gekennzeichnet,** daß der Tragegürtel (4) als offener Ring ausgebildet ist, der durch einen die beiden Gürtelenden auf das erforderliche Maß zusammenziehenden Signodespanner spannbar ist.

14. Wärmedämmung nach einem der Ansprüche 1 bis 13, **dadurch gekennzeichnet,** daß die Enden der Tragegürtel vorgestanzte Löcher für die gegenseitige Verbindung der Enden durch Blindnieten aufweisen.

15. Wärmedämmung nach einem der Ansprüche 1 bis 14, **dadurch gekennzeichnet,** daß der Schutzmantel (2) aus sich im Bereich der Tragegürtel (4) überlappenden Segmenten besteht.

16. Wärmedämmung nach Anspruch 15, **dadurch gekennzeichnet,** daß die Schutzmantelsegmente (2, 2') jeweils durch Rundnähte miteinander und mit dem Tragegürtel (4) verbunden sind.

17. Wärmedämmung nach einem der Ansprüche 1 bis 16, **dadurch gekennzeichnet,** daß der Schutzmantel (4) aus glattem Blech oder in Richtung senkrecht zur Rohrachse profiliertem Blech besteht.

18. Wärmedämmung nach Anspruch 17, **dadurch gekennzeichnet,** daß der Schutzmantel (4) aus Trapezblech besteht.

19. Wärmedämmung nach einem der Ansprüche 1 bis 18, **dadurch gekennzeichnet,** daß bei horizontaler Rohrführung der Tragegürtel (4) durch wenigstens einen senkrecht zwischen den Scheitellinien von Rohrwand und Tragegürtel verlaufenden, die Dämmstoffschicht (1) durchsetzenden Bolzen oder Steg abgestützt ist.

20. Wärmedämmung nach Anspruch 19, **dadurch gekennzeichnet,** daß der Tragegürtel (4) jeweils im Winkelabstand von etwa 30° zur Scheitellinie des Rohres bzw. Blechmantels gegen das Rohr (5) durch einen Bolzen oder Steg abgestützt ist.

21. Wärmedämmung nach Anspruch 19 oder 20, **dadurch gekennzeichnet,** daß der Bolzen ein Steatit- oder Keramikbolzen ist.

22. Wärmedämmung nach einem der Ansprüche 1 bis 21, **dadurch gekennzeichnet,** daß der Tragegürtel (4) aus Blech mit einer Stärke zwischen 1 und 1,5 mm besteht.

23. Wärmedämmung nach einem der Ansprüche 1 bis 22, **dadurch gekennzeichnet,** daß der Durchmesser des Rohres (5) größer oder gleich 200 mm ist.

24. Wärmedämmung nach einem der Ansprüche 1 bis 23, **dadurch gekennzeichnet,** daß die Oberflächentemperatur des Rohres (5) im Bereich zwischen 250° und 700°C liegt.

## Claims

1. Thermal insulation for pipes or tanks, with a layer of insulating material (1) arranged on the outside wall of the pipe (5) and a protective jacket (2) arranged as surface protection over the layer of insulating material (1), **characterised in that** belts of insulating material (3) surrounding the pipes (5) with the layer of insulating material (1) are provided at intervals, with carrying belts (4) arranged thereabove, wherein in each case the layer of insulating material (1) and the belt of insulating material (3) are compressed and compacted under the carrying belt (4) and the protective jacket (2) comes to lie against the carrying belt (4).

2. Thermal insulation according to claim 1, **characterised in that** the carrying belt is a metal belt (4).

3. Thermal insulation according to claim 1 or 2, **characterised in that** the protective jacket is a metal jacket.

4. Thermal insulation according to any of claims 1 to 3, **characterised in that** the belt of insulating material (3) and the layer of insulating material (1) are compressed under the carrying belt to such an extent that the carrying belt (4) lies approximately flush with the surface of the layer of insulating material (1).

5. Thermal insulation according to any of claims 1 to 4, **characterised in that** the compressed insulating material under the carrying belt (4) has a density of at least 120 kg/m$^3$.

6. Thermal insulation according to any of claims 1 to 5, **characterised in that** the distance between the belts of insulating material (3) and carrying belts (4) is at least 950 mm.

7. Thermal insulation according to any of claims 1 to 6, **characterised in that** the width of the carrying belts (4) is at least equal to the width of the belts of insulating material (3).

8. Thermal insulation according to any of claims 1 to 7, **characterised in that** the width of the belts of insulating material (3) is at least 100 mm.

9. Thermal insulation according to any of claims 1 to 8, **characterised in that** the thickness of the belt of insulating material (3) is about one-third of the thickness of the uncompressed layer of insulating material (1).

10. Thermal insulation according to any of claims 1 to 9, **characterised in that** the layer of insulating material (3) consists of mineral fibre mats which are stitched onto a wire mesh.

11. Thermal insulation according to any of claims 1 to 10, **characterised in that** the layer of insulating material (1) has one or more plies.

12. Thermal insulation according to any of claims 1 to 11, **characterised in that** the layer of insulating material (1) has a thickness according to the calculated insulating thickness.

13. Thermal insulation according to any of claims 1 to 12, **characterised in that** the carrying belt (4) is constructed as an open ring which can be tightened by a Signode tensioner which pulls the two belt ends together to the required size.

14. Thermal insulation according to any of claims 1 to 13, **characterised in that** the ends of the carrying belts comprise prepunched holes for mutual connection of the ends by blind rivets.

15. Thermal insulation according to any of claims 1 to 14, **characterised in that** the protective jacket (2) consists of segments overlapping each other in the region of the carrying belts (4).

16. Thermal insulation according to claim 15, **characterised in that** the protective jacket segments (2, 2′) are in each case connected to each other and to the carrying belt (4) by round seams.

17. Thermal insulation according to any of claims 1 to 16, **characterised in that** the protective jacket (4) is made of smooth sheet metal or sheet metal profiled in a direction perpendicular to the pipe axis.

18. Thermal insulation according to claim 17, **characterised in that** the protective jacket (4) is made of sheet metal with trapezoidal corrugations.

19. Thermal insulation according to any of claims 1 to 18, **characterised in that** if the pipes run horizontally, the carrying belt (4) is supported by at least one bolt or web extending perpendicularly between the apex lines of pipe wall and carrying belt and passing through the layer of insulating material (1).

20. Thermal insulation according to claim 19, **characterised in that** the carrying belt (4) is supported against the pipe (5) by a bolt or web in each case at an angular distance of about 30° to the apex line of the pipe or metal jacket.

21. Thermal insulation according to claim 19 or 20, **characterised in that** the bolt is a steatite or ceramic bolt.

22. Thermal insulation according to any of claims 1 to 21, **characterised in that** the carrying belt (4) is made of sheet metal with a thickness between 1 and 1.5 mm.

23. Thermal insulation according to any of claims 1 to 22, **characterised in that** the diameter of the pipe (5) is greater than or equal to 200 mm.

24. Thermal insulation according to any of claims 1 to 23, **characterised in that** the surface temperature of the pipe (5) is within the range between 250° and 700°C.


**Revendications**

1. Isolation thermique pour tuyaux ou récipients, comprenant une couche en matière isolante (1) agencée sur la paroi extérieure du tuyau (5) et une enveloppe de protection (2) agencée au-dessus de la couche de matière isolante (1) comme protection de surface, **caractérisée en ce que**, à intervalles, les tuyaux (5) sont prévus avec des ceintures en matière isolante (3) qui entourent la couche de matière isolante (1) et qui présentent des ceintures de support (4) agencées par-dessus, la couche de matière isolante (1) et la ceinture de matière isolante (3) étant pressées l'une contre l'autre et comprimées sous la ceinture de support (4), l'enveloppe de protection (2) venant en appui contre la ceinture de support (4).

2. Isolation thermique suivant la revendication 1, **caractérisée en ce** que la ceinture de support est une ceinture en tôle (4).

3. Isolation thermique suivant l'une des revendications 1 et 2, **caractérisée en ce que** l'enveloppe de protection est une enveloppe en tôle.

4. Isolation thermique suivant l'une des revendications 1 à 3, **caractérisée en ce que** la ceinture en matière isolante (3) et la couche de matière isolante (1) sont pressées l'une contre l'autre sous la ceinture de support à tel point que la ceinture de support (4) se termine approximativement à fleur de la surface de la couche de matière isolante (1).

5. Isolation thermique suivant l'une des revendications 1 à 4, **caractérisée en ce que** la matière isolante comprimée sous la ceinture de support (4) présente une densité d'au moins 120 kg/m 3.

6. Isolation thermique suivant l'une des revendications 1 à 5, **caractérisée en ce que** la distance entre les ceintures de matière isolante (3) ou respectivement de support (4) est d'au moins 950 mm.

7. Isolation thermique suivant l'une des revendications 1 à 6, **caractérisée en ce que** la largeur des ceintures de support (4) est au moins identique à la largeur des ceintures en matière isolante (3).

8. Isolation thermique suivant l'une des revendications 1 à 7, **caractérisée en ce que** la largeur des ceintures en matière isolante (3) est d'au moins 100 mm.

9. Isolation thermique suivant l'une des revendications 1 à 8, **caractérisée en ce que** l'épaisseur de la ceinture en matière isolante (3) est d'environ un tiers de l'épaisseur de la couche de matière isolante (1) non comprimée.

10. Isolation thermique suivant l'une des revendications 1 à 9, **caractérisée en ce que** la couche de matière isolante (3) est constituée de mats de fibres minérales qui sont piquées sur un treillis métallique.

11. Isolation thermique suivant l'une des revendications 1 à 10, **caractérisée en ce que** la couche de matière isolante (1) est en une ou plusieurs couches.

12. Isolation thermique suivant l'une des revendications 1 à 11, **caractérisée en ce que** la couche de matière isolante (1) présente une épaisseur conforme à l'épaisseur d'isolation calculée.

13. Isolation thermique suivant l'une des revendications 1 à 12, **caractérisée en ce que** la ceinture de support (4) est réalisée sous la forme d'un anneau ouvert qui peut être serré par un élément de serrage Signode resserrant les deux extrémités de ceinture à la mesure requise.

14. Isolation thermique suivant l'une des revendications 1 à 13, **caractérisée en ce que** les extrémités des ceintures de support présentent des trous préalablement percés pour la liaison mutuelle des extrémités par des rivets aveugles.

15. Isolation thermique suivant l'une des revendications 1 à 14, **caractérisée en ce que** l'enveloppe de protection (2) est constituée de segments qui se recouvrent dans la zone des ceintures de support (4).

16. Isolation thermique suivant la revendication 15, **caractérisée en ce que** les segments d'enveloppe de protection (2, 2') sont, par des joints circulaires, reliés l'un à l'autre et à la ceinture de support (4).

17. Isolation thermique suivant l'une des revendications 1 à 16, **caractérisée en ce que** l'enveloppe de protection (4) est constituée d'une tôle lisse ou d'une tôle profilée dans un sens perpendiculaire à l'axe du tuyau.

18. Isolation thermique suivant la revendication 17, **caractérisée en ce que** l'enveloppe de protection (4) est constituée d'une tôle à ondes trapézoïdales.

19. Isolation thermique suivant l'une des revendications 1 à 18, **caractérisée en ce que**, lors d'un guidage horizontal du tuyau, la ceinture de support (4) est soutenue par au moins un axe ou nervure qui s'étend verticalement entre les lignes de sommet de la paroi du tuyau et des ceintures de support et qui traverse la couche de matière isolante (1).

20. Isolation thermique suivant la revendication 19, **caractérisée en ce que** la ceinture de support (4) est soutenue contre le tuyau (5) par un axe ou nervure respectivement à une distance angulaire d'environ 30° par rapport à la ligne de sommet du tuyau et respectivement de l'enveloppe en tôle.

21. Isolation thermique suivant l'une des revendications 19 et 20, **caractérisée en ce que** l'axe est un axe en stéatite ou en matière céramique.

22. Isolation thermique suivant l'une des revendications 1 à 21, **caractérisée en ce que** la ceinture de support (4) est constituée de tôle ayant une épaisseur comprise entre 1 et 1,5 mm.

23. Isolation thermique suivant l'une des revendications 1 à 22, **caractérisée en ce que** le diamètre du tuyau (5) est plus grand ou égal à 200 mm.

24. Isolation thermique suivant l'une des revendications 1 à 23, **caractérisée en ce que** la température de surface du tuyau (5) est de l'ordre compris entre 250° et 700°C.

FIG.1

**FIG.2**

**FIG.3**

**FIG.4**